# EUROPEAN PATENT SPECIFICATION

(11) **EP 1 103 981 B1**
(45) Date of publication and mention of the grant of the patent: **24.05.2006**
(21) Application number: 00125269.1
(22) Date of filing: 24.11.2000
(51) Int. Cl.: G21C 9/004, G21C 15/18

(54) **Pressure suppression apparatus for reactor container**
Druckentlastungsvorrichtung für einen Kernreaktorbehälter
Dispositif de dépressurisation d'une enceinte de confinement d'un réacteur nucléaire

(30) Priority: 24.11.1999 JP 33218999
(43) Date of publication of application: 30.05.2001
(73) Proprietor: KABUSHIKI KAISHA TOSHIBA, Tokyo (JP)
(72) Inventor: Tobimatsu, Toshimi, 1-1 Shibaura 1-chome Minato-ku Tokyo 105 (JP); Yokobori, Seiichi, 1-1 Shibaura 1-chome Minato-ku Tokyo 105 (JP); Akinaga, Makoto, 1-1 Shibaura 1-chome Minato-ku Tokyo 105 (JP)
(74) Representative: HOFFMANN EITLE

(56) References cited:
- EP-A- 0 460 805
- DE-A- 19 801 618
- US-A- 4 416 850
- US-A- 4 645 641
- US-A- 5 657 360
- PATENT ABSTRACTS OF JAPAN vol. 1997, no. 08, 29 August 1997 (1997-08-29) & JP 09 090092 A (HITACHI LTD ET AL.)
- PATENT ABSTRACTS OF JAPAN vol. 1997, no. 09, 30 September 1997 (1997-09-30) & JP 09 127283 A (TOSHIBA CORP)

## Description

### BACKGROUND

### Field of the Invention

The present invention relates to a pressure suppression or release apparatus, and more particularly to a pressure suppression apparatus used for a reactor container in a nuclear power plant.

### Description of the Related Art

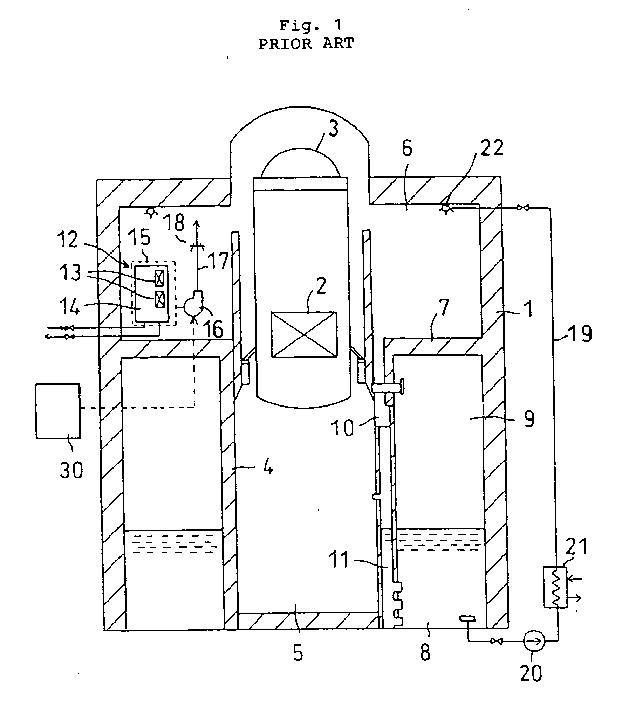

Fig. 1 is a sectional view showing a conventional reactor container. In the reactor container 1, a reactor vessel 3, which includes a reactor core 2 storing nuclear fuels for electric power generation, is supported by pedestals 4. The reactor container 1 is further equipped with a lower drywell 5 surrounded by the pedestals 4, an upper drywell 6 surrounding the reactor vessel 3, and suppression chambers 9 defined by diaphragm floors 7 and having suppression pools 8 therein.

The lower drywell 5 and the upper drywell 6 are both coupled by connecting tubes 10 and vented tubes 11, and thereby connected underwater to the suppression pools 8 in the suppression chamber 9. A plurality of drywell coolers 12, which are capable of keeping a cooled condition inside the lower drywell 5 and the upper drywell 6 in regular operating mode, are disposed as a pressure suppression apparatus.

Each drywell cooler 12 includes a drywell cooling unit 15 and a fan 16 as a circulator. The drywell-cooling unit 15 includes a casing 14 and cooling coils 13. Cooling water is used to cool the cooling coils 13, and air inside the lower drywell 5 and the upper drywell 6 is guided to the casing 14. Specifically, pressure inside the casing 14 is decreased by the fan 16 by realizing pressure difference, and thereby air circulation is generated through the casing 14. The air circulation thus generated guides air into the casing 14, and the entering air is cooled by the cooling coils 13. The cooled air is then circulated to the lower drywell 5 and the upper drywell 6 through ducts 17 and dumpers 18.

The cooling water in the suppression pool 8 is pumped by a residual heat removal pump 20 in a residual heat removal line 19, and heat exchange of the cooling water is made by a residual heat removal heat exchange 21. Spray heads 22 then spray the cooled water back into the suppression pool 8. This cooling system cools the reactor container 1 in high-temperature or high-pressure condition.

In the conventional reactor container 1 thus constituted, a large amount of a fluid mixture including, for example, gases, vapor, and water at a high temperature is generated in the lower drywell 5 and the upper drywell 6 in case of "loss of coolant accident" (LOCA: an accident in which coolant in the reactor vessel 3 is leaked). In this case, the mixture is guided to cooling water in the suppression pool 8 of the suppression chamber 9, and therefore, a pressure increase inside the reactor container 1 is restrained.

However, if the above-explained LOCA continues and the cooling system is operated for a long time, gaseous phase including a non-condensable gas is pressurized by stored water in the reactor container 1, and this may cause an increase of pressure in the reactor container 1.

In order to avoid this problem, the drywell cooler 12 can be used to suppress pressure. That is, air in the lower drywell 5 and the upper drywell 6 can be cooled efficiently, and heat can be exhausted outside of the reactor vessel 3.

More specifically, by flowing cooling water to the cooling coils 13 in the drywell cooler 12, vapor in the casing 14 can be condensed. Consequently, vapor pressure in the reactor container 1 can be reduced by guiding the vapor therein into the casing 14.

However, a power supply 30, which supplies electric power to a fan 16 in the dry-well cooler 12, is usually operated only in the regular operating mode, and is automatically stopped in case of an emergency. Therefore, non-condensable gas, such as nitrogen gas initially enclosed in the reactor container 1, hydrogen gas generated by increasing temperature and pressure therein, and the like, gradually collects around the casing 14. Thereby, the casing 14 holds a large amount of the non-condensable gas. This deteriorates the heat exchange performance of the drywell cooler 12, and the rise of vapor pressure in the reactor container 1 cannot be suppressed.

An isolation condenser passive cooling operation in a nuclear reactor containment is disclosed in the publication EP 0 460 805 A1.

### SUMMARY OF THE INVENTION

The present invention has been made in view of the above-mentioned circumstances and is intended to solve the above-mentioned problems. In particular, the purpose of the present invention is to provide a pressure suppression apparatus for a reactor container capable of allowing a drywell-cooling unit in case of emergency, to reduce vapor pressure in the reactor container.

The present invention provides a pressure suppression apparatus, including: a reactor vessel that stores nuclear fuel; a reactor container that stores the reactor vessel and defines a drywell room; a drywell cooler that cools a fluid, such as gases, liquids, vapor, water, or mixtures in the drywell room so as to suppress pressure in the drywell room; a circulator that guides fluid in the drywell room into the drywell cooler; and an exhauster that exhausts a non-condensable fluid from the drywell cooler.

Here, the exhauster may include a fan. The fan may be constituted such that the fan functions when the circulator stops. Further, the circulator may function by a regular power supply, and the fan may function by an emergency power supply.

The exhauster may include a door that links the inside to the outside of the drywell cooler. The door may be closed when the circulator operates, and the door may be opened when the circulator does not operate. The door may be operated mechanically, or the door may be operated by a pressure difference between the inside and the outside of the drywell cooler.

Further, the exhauster may include a material that melts at a certain temperature and then links the inside and the outside of the drywell cooler. The material may melt at a temperature that is higher than that in the reactor container in regular operating mode.

The circulator may include a first fan, and the exhauster may include a second fan. Here, the first fan may be larger than the second fan.

### BRIEF DESCRIPTION OF DRAWINGS

The accompanying drawings, which are incorporated in and constitute a part of this specification, illustrate several preferred embodiments of the present invention and, together with the description, serve to explain the principles of the present invention.
Fig. 1 is a sectional view showing a conventional reactor container.
Fig. 2 is a sectional view showing a reactor container of the present invention.
Fig. 3 is a sectional view showing the pressure suppression apparatus in the reactor container according to a first embodiment of the present invention.
Fig. 4 is a sectional view showing the pressure suppression apparatus in the reactor container according to a second embodiment of the present invention.
Fig. 5 is a sectional view showing the pressure suppression apparatus in the reactor container according to a third embodiment of the present invention.
Figs. 6A and 6B are sectional views showing the pressure suppression apparatus in the reactor container according to a fourth embodiment of the present invention; Fig. 6A indicates when a fan operates, and Fig. 6B indicates when the fan stops.

### DESCRIPTION OF PREFERRED EMBODIMENTS

Preferred embodiments of a pressure suppression or release apparatus for a reactor container of the present invention will now be specifically described in more detail with reference to the accompanying drawings. Wherever possible, the same reference numbers will be used throughout the drawings to refer to the same or like parts.

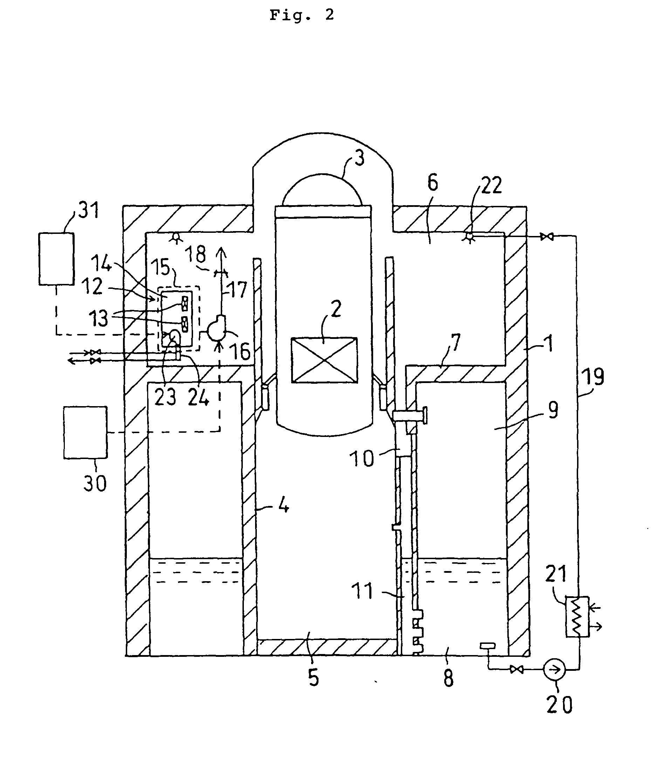

First, a pressure suppression apparatus arranged in a reactor container is explained by referring to Fig. 2, which illustrates a sectional view of the reactor container.

The feature of the present invention is that a non-condensable fluid exhauster such as a second fan 23 is disposed in the reactor container 1 together with the circulator such as the fan 16, and the second fan 23 is operated by an emergency power supply 31.

In case of an emergency, such as the LOCA for example, the cooling coils 13 in the drywell cooler 12, which is a pressure suppression apparatus, can continue to condense vapor in the casing 14. However, as time progresses, non-condensable gas, such as nitrogen gas initially enclosed in the reactor container 1, hydrogen gas generated by increasing temperature and pressure therein, and the like, gradually collects around the casing 14.

In this situation, the regular power supply 30 is already disconnected due to safety, and many devices including the fan 16 stop.

However, the second fan 23 may be connected to the emergency power supply 31 in the present invention. Therefore, as soon as the regular power supply 30 is disconnected, the emergency power supply 31 is connected automatically, and thereby the second fan 23 is operated accordingly. By using the second fan 23, the non-condensable gas is exhausted to outside of the drywell cooling unit 15 or to inside of the suppression chamber 9 through an exhaust duct 24.

Partial pressure of the non-condensable gas around the cooling coils 13 decreases; partial pressure of the non-condensable gas in the casing 14 of the drywell cooling unit 15 also decreases, and heat exchange performance of the apparatus can be maintained. Consequently, increases in the internal pressure of the reactor container 1 can be suppressed for a long time.

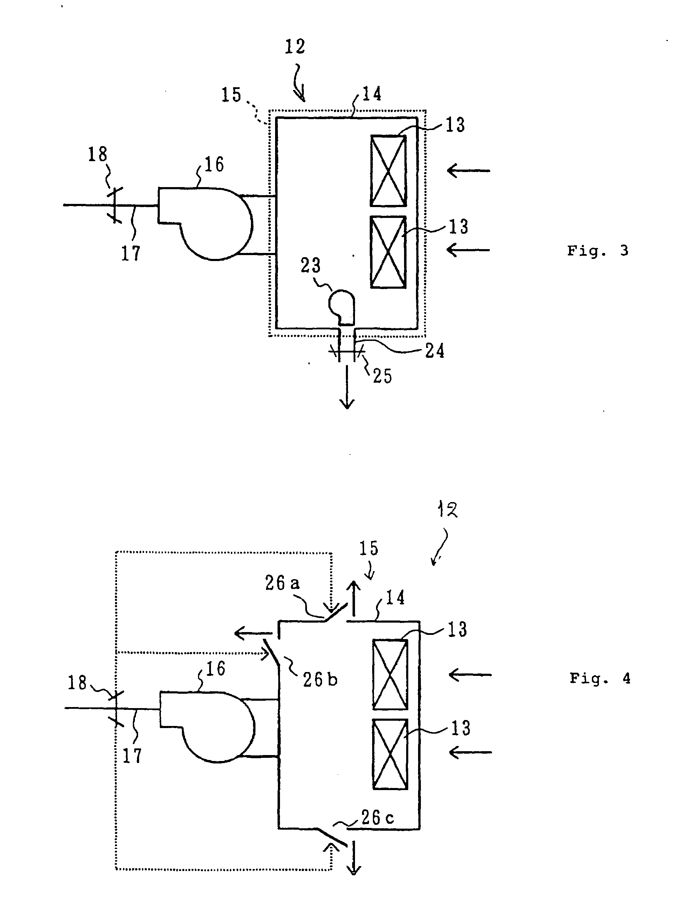

Fig. 3 is a sectional view showing the drywell cooler 12 in the reactor container in Fig. 2. As shown in Fig. 3, the second fan 23 is disposed in the drywell cooling unit 15 of the drywell cooler 12, which acts as a pressure suppression apparatus of the reactor container 1. One end of the exhaust duct 24 is connected to the exit of the second fan 23, and another end thereof is connected to a check valve 25. The check valve 25 is equipped so as to avoid air or vapor around the drywell cooling unit 15 flowing into the casing 14, and closes when the second fan 23 stops.

Here, the second fan 23 directs air towards the lower surface of the drywell cooling unit 15, and the exit thereof faces the direction of gravity, as shown in Fig. 2. This is because nitrogen, which is a non-condensable gas initially enclosed in the reactor container 1, is heavier than air. The nitrogen gas collects downward of the casing 14, and can be exhausted easily.

However, the position of the second fan 23 is not limited to this example, and can be disposed on a side surface or an upper surface of the drywell cooling unit 15. Similarly, the number of second fans 23 is not limited to one; a plurality of second fans can be disposed in each drywell cooling unit 15.

Further, heat exchange performance of the drywell cooling unit 15 can be maintained as long as the second fan 23 exhausts non-condensable gas out from the casing 14. For this reason, the size of the second fan 23 can be smaller than that of the fan 16.

Fig. 4 is a sectional view showing the drywell cooler 12 according to a second embodiment of the present invention. The feature of the second embodiment is that doors 26a, 26b and 26c, which open when temperature and pressure in the drywell cooling unit 15 increase, are disposed on the casing 14 of the drywell cooling unit 15. The doors, vents, panels, shutters, or openings provide a pressure release or suppression mechanism. The doors 26a, 26b and 26c are disposed in an upper surface, side surface, and lower surface, respectively.

When the dumper 18 on the duct 17 opens or closes, the doors 26a, 26b and 26c are operated simultaneously. That is, the doors 26a, 26b and 26c are connected to the exit of the dumper 18 mechanically, by means of springs, for example, and are opened by using force generated when the dumper 18 closes.

When the fan 16 operates, the inside of the casing 14 is depressurized due to exhaustion thereof. Therefore, it is possible to operate the doors 26a, 26b, and 26c such that they are closed when the fan 16 operates, and they are opened automatically by gravity when the fan 16 stops.

In this embodiment, the second fan 23 shown in Fig. 3 is not required. Because of the specific gravity against air, the upper door 26a and the side door 26b can exhaust mainly hydrogen, and the lower door 26c can exhaust mainly nitrogen, out from the casing 14.

According to this embodiment, nitrogen, which is heavier than vapor among non-condensable gas, can be exhausted mainly from the lower door 26c, and hydrogen, which is lighter than vapor among non-condensable gas, can be exhausted mainly from the upper door 26a and the side door 26b. Thereby, heat exchange performance of the drywell cooling unit 15 can be improved.

In addition, the second fan is not required for this embodiment; additional equipment such as the emergency power supply are also not needed. Therefore, the structure of the apparatus can be simplified.

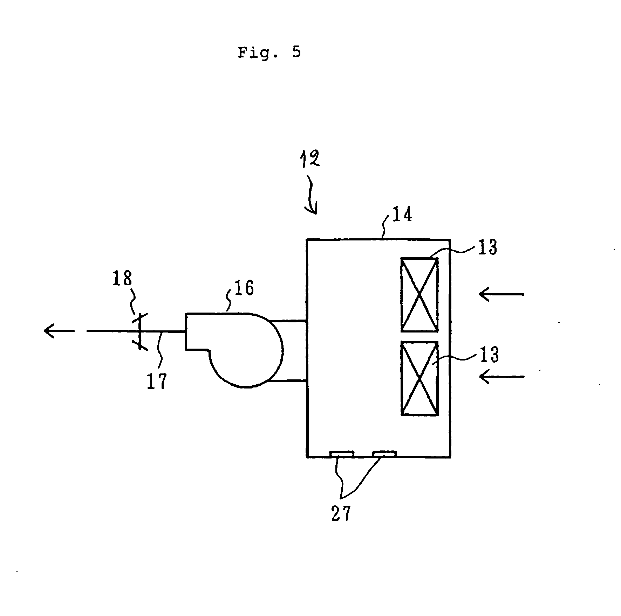

Fig. 5 is a sectional view showing the drywell cooler 12 according to a third embodiment of the present invention. The feature of this embodiment is that materials 27 having a low melting point comprise a portion of the casing 14, and the materials 27 and the casing 14 form the enclosure of the drywell cooling unit 15.

These materials 27 melt under certain atmospheric condition that are chosen in designing a nuclear reactor; the materials 27 melt when the atmosphere exceeds an environmental temperature in the reactor container 1 for example. If the temperature inside of the reactor container 1 becomes higher than a predetermined temperature, the materials 27 melt and then openings appear in the wall of the casing 14. Thereby, non-condensable gas in the casing 14 can be exhausted outward.

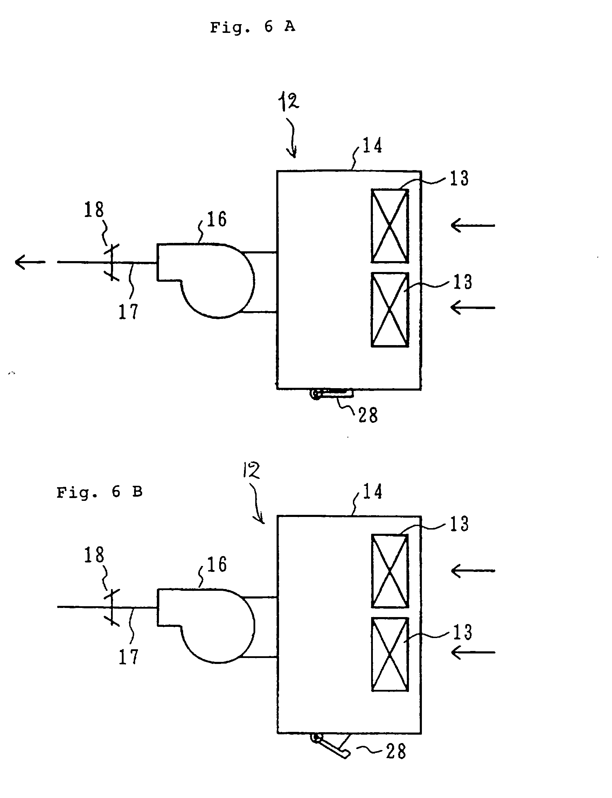

Figs. 6A and 6B are sectional views showing the drywell cooler 12 according to a fourth embodiment of the present invention. Here, Fig. 6A indicates when the fan 16 operates, and Fig. 6B indicates when the fan 16 stops.

In this embodiment, a second door 28 is disposed in the lower surface of the casing 14. The second door 28 is closed by absorptivity of the fan 16 in a normal operation mode as shown in Fig. 6A, and is opened by gravity when the fan 16 stops. This also makes it possible to exhaust non-condensable gas in the casing 14 outward.

The foregoing discussion discloses and describes several exemplary embodiments of the present invention. As will be understood by those skilled in the art, the present invention may be embodied in other specific forms without departing from the scope thereof. Accordingly, the disclosure of the present invention is intended to be illustrative, but not limiting, of the scope of the invention, which is set forth in the following claims. Thus, the present invention may be embodied in various ways within the scope of the spirit of the invention.

For example, the explanation above is made when the present invention is applied to a BWR (Boiled Water Reactor) nuclear power plant, however, the present invention is also applied to other types of plants such as a PWR (Pressurized Water Reactor) nuclear power plant.

## Claims

1. A pressure suppression apparatus for
a reactor container (1) that stores a reactor vessel (3) with nuclear fuel (2) and defines a drywell room (5, 6), comprising
a drywell cooler (12) that cools a fluid in the drywell room so as to suppress pressure in the drywell room; and
a circulator (16) that guides fluid in the drywell room into the drywell cooler,
**characterized by** comprising an exhauster (23), separate from the circulator, that exhausts a non-condensable fluid from the drywell cooler.

2. The apparatus according to claim 1, wherein the exhauster comprises a fan.

3. The apparatus according to claim 2, wherein the exhauster functions when the circulator stops.

4. The apparatus according to claim 3, further comprising a regular power supply (30) connected to the circulator, and an emergency power supply (31) connected to the exhauster.

5. The apparatus according to claim 1, wherein the exhauster includes a door (26a, b, c) that links the inside to the outside of the drywell cooler.

6. The apparatus according to claim 5, wherein the door is closed when the circulator operates, and the door is opened when the circulator does not operate.

7. The apparatus according to claim 6, wherein the door is operated mechanically.

8. The apparatus according to claim 6, wherein the door is operated by a pressure difference between the inside and the outside of the drywell cooler.

9. The apparatus according to claim 1, wherein the exhauster comprises a material (27) that melts at a certain temperature and links the inside to the outside of the drywell cooler.

10. The apparatus according to claim 9, wherein the material melts at a temperature that is higher than the temperature in the reactor container in regular operating mode.

11. The apparatus according to claim 1, wherein the circulator comprises a first fan and wherein the exhauster comprises a second fan.

12. The apparatus according to claim 11, wherein the first fan is larger than the second fan.

13. The apparatus according to any of the preceding claims, wherein the drywell cooler cools the fluid by means of a cooling coil (12).

## Patentansprüche

1. Druckentlastungsvorrichtung für eine Reaktorhülle (1), in der ein Reaktorbehälter (3) mit Kernbrennstoff (2) untergebracht ist und die einen Druckkammerraum (5, 6) definiert, umfassend
einen Druckkammerkühler (12), der ein Fluid im Druckkammerraum kühlt, um so Druck im Druckkammerraum zu entlasten; und
einen Zirkulator (16), der Fluid im Druckkammerraum in den Druckkammerkühler führt,
**dadurch gekennzeichnet, dass** sie eine vom Zirkulator getrennte Absaugvorrichtung (23) umfasst, die nicht kondensierbares Fluid aus dem Druckkammerkühler absaugt.

2. Vorrichtung nach Anspruch 1, wobei die Absaugvorrichtung ein Gebläse umfasst.

3. Vorrichtung nach Anspruch 2, wobei die Absaugvorrichtung arbeitet, wenn der Zirkulator stillsteht.

4. Vorrichtung nach Anspruch 3, weiter eine mit dem Zirkulator verbundene reguläre Stromversorgung (30) und eine mit der Absaugvorrichtung verbundene Notstromversorgung (31) umfassend.

5. Vorrichtung nach Anspruch 1, wobei die Absaugvorrichtung eine Tür (26a, 26b, 26c) umfasst, die die Innenseite mit der Außenseite des Druckkammerkühlers verbindet.

6. Vorrichtung nach Anspruch 5, wobei die Tür geschlossen ist, wenn der Zirkulator in Betrieb ist, und die Tür geöffnet ist, wenn der Zirkulator nicht in Betrieb ist.

7. Vorrichtung nach Anspruch 6, wobei die Tür mechanisch betätigt wird.

8. Vorrichtung nach Anspruch 6, wobei die Tür durch einen Druckunterschied zwischen der Innenseite und der Außenseite des Druckkammerkühlers betätigt wird.

9. Vorrichtung nach Anspruch 1, wobei die Absaugvorrichtung ein Material (27) umfasst, das bei einer bestimmten Temperatur schmilzt und die Innenseite mit der Außenseite des Druckkammerkühlers verbindet.

10. Vorrichtung nach Anspruch 9, wobei das Material bei einer Temperatur schmilzt, die höher ist als die Temperatur in der Reaktorhülle im regulären Betriebsmodus.

11. Vorrichtung nach Anspruch 1, wobei der Zirkulator ein erstes Gebläse umfasst und wobei die Absaugvorrichtung ein zweites Gebläse umfasst.

12. Vorrichtung nach Anspruch 11, wobei das erste Gebläse größer als das zweite Gebläse ist.

13. Vorrichtung nach einem der vorangehenden Ansprüche, wobei der Druckkammerkühler die Flüssigkeit mittels einer Kühlschlange (12) kühlt.

## Revendications

1. Appareil de suppression de la pression pour
une enceinte de confinement (1) de réacteur dans laquelle est stocké un caisson (3) de réacteur avec un combustible 1 nucléaire (2) et qui définit un espace (5, 6) de la partie sèche de l'enceinte, comprenant
un refroidisseur (12) de la partie sèche de l'enceinte qui refroidi un fluide dans l'espace de la partie sèche de l'enceinte afin de supprimer une pression dans l'espace de la partie sèche de l'enceinte ; et
un circulateur (16) qui guide un fluide dans l'espace de la partie sèche de l'enceinte dans le refroidisseur de la partie sèche de l'enceinte,
**caractérisé en ce qu'**il comprend un évacuateur (23), séparé du circulateur, qui évacue un fluide non condensable du refroidisseur de la partie sèche de l'enceinte.

2. Appareil selon la revendication 1, dans lequel l'évacuateur comprend un ventilateur.

3. Appareil selon la revendication 2, dans lequel l'évacuateur entre en fonctionnement lorsque le circulateur s'arrête.

4. Appareil selon la revendication 3, comprenant en outre une alimentation électrique normale (30) raccordée au circulateur, et une alimentation électrique de secours (31) raccordée à l'évacuateur.

5. Appareil selon la revendication 1, dans lequel l'évacuateur comporte une porte (26a, b, c) qui relie l'intérieur à l'extérieur du refroidisseur de la partie sèche de l'enceinte.

6. Appareil selon la revendication 5, dans lequel la porte est fermée lorsque le circulateur fonctionne, et la porte est ouverte lorsque le circulateur ne fonctionne pas.

7. Appareil selon la revendication 6, dans lequel la porte est mise en fonctionnement mécaniquement.

8. Appareil selon la revendication 6, dans lequel la porte est mise en fonctionnement par une différence de pression entre l'intérieur et l'extérieur du refroidisseur de la partie sèche de l'enceinte.

9. Appareil selon la revendication 1, dans lequel l'évacuateur comprend un matériau (27) qui fond à un certain niveau de température et relie l'intérieur à l'extérieur du refroidisseur de la partie sèche de l'enceinte.

10. Appareil selon la revendication 9, dans lequel le matériau fond à un niveau de température qui est plus élevé que la température dans l'enceinte de confinement du réacteur en mode de fonctionnement normal.

11. Appareil selon la revendication 1, dans lequel le circulateur comprend un premier ventilateur et dans lequel l'évacuateur comprend un second ventilateur.

12. Appareil selon la revendication 11, dans lequel le premier ventilateur est plus grand que le second ventilateur.

13. Appareil selon l'une quelconque des revendications précédentes, dans lequel le refroidisseur de la partie sèche de l'enceinte refroidit le fluide au moyen d'un serpentin (12) de refroidissement.
